# EUROPEAN PATENT APPLICATION

(11) **EP 4 762 904 A1**
(43) Date of publication of application: **24.06.2026**
(21) Application number: 24222550.6
(22) Date of filing: 20.12.2024
(51) Int. Cl.: A01D 33/08, A01D 90/10

(54) **A VEHICLE**

(71) Applicant: Tersor BV, 8610 Kortemark (BE)
(72) Inventor: Deprez, Johan, 8680 Koekelare (BE); Rommel, Brecht, 8480 Ichtegem (BE)
(74) Representative: Ipsilon Belgium

(57) **Abstract**

A vehicle is provided, comprising
- At least one good processing unit for processing goods during moving of the vehicle;
- A first receptacle for receiving goods having been processed by said good processing unit, said first receptacle comprises a first unloading means to unload goods from said first receptacle;
- A second receptacle for receiving goods to be processed by said good processing unit; said second receptacle comprises a second unloading means adapted to unload goods from said second receptacle towards said good processing unit;
wherein said first receptacle and its first unloading means is adapted to unload goods from said first receptacle into said second receptacle. This first receptacle and/or its first unloading means may be adapted to unload goods from said first receptacle outside the vehicle as well. This first receptacle and/or its first unloading means may be rotatably mounted to unload goods from said first receptacle outside the vehicle and into said second receptacle.

## Description

### Field of the Invention

The present invention generally relates to vehicles, more particularly to agricultural vehicles, and their use in agricultural circumstances.

### Background of the Invention

Harvesting machines are used to harvest crops, such as potatoes, carrots and onions, from an agricultural field in an automated or semi-automated way. Vehicles are provided to collect freshly harvested crops from the harvesters, and process the crops during its movement time between harvesters and between a harvester and an unloading point on the field. Such a vehicle is disclosed in WO2018185100A1 .

Although the crops may be processed, e.g. removal and separation of foreign parts and material from the harvested crops, during movement of the vehicle on the field, such vehicles may suffer from the unpredictability of the amount of crops harvested per time unit. Not only time may be lost due to the limited storage capacity for crops on the vehicle, also the manoeuvring of the vehicle on the field to allow proper unloading may be cumbersome and time consuming. Hence there is a need for a more versatile vehicle, which can be used more efficient and can carry more goods during movement on the field, still being able to process the goods and to unload the processed easily and swiftly.

### Summary of the Invention

According to a first aspect of the invention, a vehicle is provided, the vehicle comprising
- At least one good processing unit for processing goods during moving of the vehicle;
- A first receptacle for receiving goods having been processed by said good processing unit, said first receptacle comprises a first unloading means to unload goods from said first receptacle;
- A second receptacle for receiving goods to be processed by said good processing unit; said second receptacle comprises a second unloading means adapted to unload goods from said second receptacle towards said good processing unit;
wherein said first receptacle and its first unloading means is adapted to unload goods from said first receptacle into said second receptacle. This first receptacle and/or its first unloading means may be adapted to unload goods from said first receptacle outside the vehicle as well. This first receptacle and/or its first unloading means may be rotatably mounted to unload goods from said first receptacle outside the vehicle and into said second receptacle. The second receptacle and/or its second unloading means may be adapted to unload goods from said second receptacle outside the vehicle as well.

According to some embodiments, the vehicle comprises
- At least one good processing unit for processing goods during moving of the vehicle;
- A first receptacle for receiving goods having been processed by said good processing unit, said first receptacle comprises a first unloading means to unload goods from said first receptacle;
- A second receptacle for receiving goods to be processed by said good processing unit; said second receptacle comprises a second unloading means adapted to unload goods from said second receptacle towards said good processing unit;
wherein said first receptacle and its first unloading means is adapted to
- unload goods from said first receptacle outside the vehicle, thus in a first direction; and
- to unload, hence to unload in a second direction, goods from said first receptacle into said second receptacle.
The second receptacle and/or its second unloading means may be adapted to unload goods from said second receptacle outside the vehicle as well.

According to some embodiments, the first unloading means is movable between at least a first and a second unloading position,
- in said first unloading position, said first unloading means being adapted to unload goods from said first receptacle outside the vehicle, hence to unload in a first direction;
- in said second unloading position, said first unloading means being adapted to unload, hence to unload in a second direction, goods from said first receptacle into said second receptacle.

As an example, the first unloading means may comprise a first good guiding means, like a transport belt or alike, which guides the goods out of the first receptacle towards either a second good guiding means or the second receptacle. This second good guiding means, e.g. a transport belt or alike, may receive the goods from the first good guiding means and may guide the goods received outside the vehicle. As such, the first unloading means is in a first unloading position thereby unloading goods outside the vehicle. The first unloading means is movable between this first unloading position and at least a second unloading position. In the second unloading position, the first good guiding means may direct the goods directly into the second receptacle, or may guide the goods out of the first receptacle towards a third good guiding means, like a transport belt or alike, being part of a second unloading means of the second receptacle, which third good guiding means on its turn directs the goods into the second receptacle. Possibly this third good guiding means may provide at least part of the ground surface of the second receptacle. Possibly this first good guiding means may provide at least part of the ground surface of the first receptacle.

It is understood that each of the first, second and/or third good guiding means possibly may comprise any types of belts or other means, like a wire rod conveyor belt, like a steel wire rod conveyor belt, optionally provided with a wire mesh or a similar open structure, mesh conveyor belts like polymer or metal mesh conveyor belts, sieve belts or sieve mesh belts, a set or rollers, also referred to as a bed of rollers, with either transverse rolls or rolls in hooked position, optionally comprising profiled rollers like spiral, star or diabolic rollers, closed conveyor belts, like PCV or other polymeric conveyor belts, and optionally having a profiled transport surface, one or more screws, and alike. Each of the first, second and/or third good guiding means may comprise or even may be a full plate, functioning as a slide or sliding surface.

Possibly the two receptacles are positioned aligned, i.e. one after the other in the chassis direction of the vehicle. Preferably the first receptacle is positioned closest to the front of the vehicle, the second closer to the back of the vehicle. The first unloading means may comprise a second good guiding means positioned between the two receptacles. This second good guiding means may guide the goods outwards to the left or right side of the vehicle.

The first good guiding means may be a transport belt, optionally a multi-part belt, whose drop off turning point can be changed in position to either
- unload in the second receptacle directly or alternatively onto a third good guiding means for guiding goods to the second receptacle, which third good guiding means may be being part of the second unloading means of the second receptacle, or
- unload outwards the vehicle by means of a second good guiding means.

To achieve this, the first good guiding means being a transport belt may e.g. be a telescopic belt, or a belt whose path may be modified by movable turning points, such the displacement of the drop off turning point is compensated for by a displacement of one or more other turning points.

Possibly, the second unloading means of the second receptacle may be adapted to unload goods from this second receptacle towards the good processing unit - hence in a first direction - as well as to unload goods from this second receptacle outside the vehicle - hence in a second direction.

As an example, the second unloading means may comprise a fourth good guiding means, like a transport belt or a hedgehog belt or alike, which guides the goods out of said second receptacle towards the good processing unit. Possibly this fourth good guiding means may be movable to direct and unload the goods outside the vehicle.

This second unloading means may comprise a third good guiding means, like a transport belt or alike, which may guide the goods out of said second receptacle, and possibly directly out of the vehicle. When the two receptacles are aligned and the second good guiding means of the first unloading means is positioned between the receptacles, the first good guiding means of the first unloading means of the first receptacle, may provide goods to this third good guiding means. When this third good guiding means guides the goods towards the second receptacle, goods from the first receptacle, via the first good guiding means of the first receptacle, may be brought into the second receptacle. When changing the direction of guidance of this third good guiding means, and by positioning or repositioning of the first good guiding means to provide goods to the second good guiding means, the third good guiding means may provide goods to this second good guiding means as well. As such goods from the second receptacle may be moved outside the vehicle by means to the third and the second good guiding means.

Alternatively, the first good guiding means may be a multi-part belt, having a transfer point above the second good guiding means, at least one of the two parts of the multi-part belt being adapted to move the outer end of the part at this transfer point. By moving this at least one movable two part of the multi-part belt in a first position, no goods are transferred towards the next downstream part adjacent the movable part, or towards the movable part by the adjacent, upstream part of the multi-part belt. The first unloading means being as such in the first unloading position, guiding the goods from the first good guiding means to the second good guiding means, and further outwards the vehicle. When the at least one movable part of the multi-part belt is brought in a second position, the goods are guided along the multipart belt towards the second receptacle. The first unloading position is as such in the second unloading position.

Possibly, the second receptacle, and in particular its second unloading means, may be adapted to unload goods from said second receptacle towards said good processing unit and may be adapted to unload goods from said second receptacle outside the vehicle.

As an example, the second unloading means may comprise a fourth good guiding means, like a transport belt or a hedgehog belt or alike, which guides the goods out of said second receptacle towards the good processing unit. Possibly this fourth good guiding means may be movable to direct and unload the goods outside the vehicle. This second unloading means may comprise a third good guiding means like a transport belt or alike, which may guide the goods out of said second receptacle, and possibly directly out of the vehicle.

When the two receptacles are aligned and the second good guiding means of the first unloading means is positioned between the receptacles, this third good guiding means of the second unloading means, may guide the goods to this second good guiding means of the first unloading means. This second good guiding means of the first unloading means may guide the goods from the first receptacle outwards the vehicle as well. As such, the second unloading means is adapted to unload goods from the second receptacle towards either the good processing unit and outside the vehicle.

Even more, when the first good guiding means comprises a multi-part belt, having a transfer point above the second good guiding means and at least one of the two parts of the multi-part belt being adapted to move the outer end of the part at this transfer point, the proper selection of the movable part, and the direction of movement of the two sides of the opened multipart belt, may be used to simultaneously unload the first and second receptacle.

By moving the at least one movable two part of the multi-part belt in a first position, the first unloading means is in the first unloading position, guide the goods from the first good guiding means to the second good guiding means, and further outwards the vehicle. The second side of the multipart belt, which may end in the second receptacle, may move in opposite direction as originally was the case, bringing goods from the second receptacle to the transfer point and possibly direct the goods from his second receptacle to the second guiding means, and hence further outwards the vehicle as well. As such the same multipart belt is used both as part of the first and the second unloading means.

Optionally, even alternatively, this second receptacle and/or its second uploading means, is movable between at least a first unloading position in which said second unloading means is adapted to unload goods from said second receptacle towards said good processing unit and a second unloading position, when said second unloading means being in said second unloading position, said second unloading means being adapted to unload goods from said second receptacle outside the vehicle.

According to some particular embodiment, the vehicle provided comprising
- at least one good processing unit for processing goods during moving of the vehicle
- a first receptacle for receiving goods having been processed by said good processing unit, said first receptacle comprises a first unloading means to unload goods from said first receptacle;
- a second receptacle for receiving goods to be processed by said good processing unit; said second receptacle comprises a second unloading means adapted to unload goods from said second receptacle towards said good processing unit;
wherein said first receptacle and/or its first unloading means is movable between at least a first and a second unloading position,
- in said first unloading position, said first unloading means being adapted to unload goods from said first receptacle outside the vehicle, hence to unload in a first direction;
- in said second unloading position, said first unloading means being adapted to unload goods from said first receptacle into said second receptacle.

Hence in these particular embodiment, the first receptacle is movable between at least a first and a second unloading position.

When the first receptacle is in this first unloading position, the first unloading means is adapted to unload goods from said first receptacle outside the vehicle, preferably in a first, possibly sidewise, direction. When the first receptacle is in this second unloading position, the first unloading means is adapted to unload goods from said first receptacle towards and into this second receptacle.

Optionally, the first receptacle is movable between at least a first, a second and a third unloading position.

When the first receptacle is in this first unloading position, the first unloading means is adapted to unload goods from said first receptacle outside the vehicle, preferably in a first, preferably sidewise, direction. When the first receptacle is in this second unloading position, the first unloading means is adapted to unload goods from said first receptacle towards and into this second receptacle. When the first receptacle is in this third unloading position, the first unloading means is adapted to unload goods from said first receptacle outside the vehicle, preferably in a second, preferably sidewise, direction, most preferably in a second sidewise direction opposite the first sidewise direction.

The advantage is that, while movement of the vehicle, the vehicle may first empty the second receptacle and process the goods which are in this receptacle, while the processed goods are brought to and stored in the first receptacle. The vehicle may, during this operation, obtain further fresh goods to be processed in the second receptacle. When the first receptacle is filled partially or completely, the first unloading means may transfer processed goods, possibly the excess of processed goods, back to the second receptacle while the first receptacle and its first unloading means is in its second unloading position. So during the next phase, the vehicle may move to the dumping position while still goods are processed and temporarily stored in the second receptacle.

When the vehicle has arrived at the dumping position, the first receptacle and hence the first unloading means may be brought in its first unloading position, to unload or dump the processed goods outside the vehicle. The processed goods in the second receptacle may either be unloaded in a different way, such as over the back of the vehicle by a second unloading means, or may reprocess in the good processing unit and as such arrive in the first receptable again, for being unloaded by the first unloading means.

In this way, the vehicle may continue its processing over a longer period of time, causing less idle time for the good processing unit, and the vehicle has the possibility to be charged with more unprocessed goods before unloading the processed goods.

The vehicle obviously is a movable device, hence a movable vehicle. The vehicle preferably is an agricultural vehicle, and suitable to be moved on roads and on agricultural fields.

The vehicle may be a self-driving vehicle, comprising a driving means making the vehicle move on or across agricultural terrains and roads. Alternatively, the vehicle may be a towed vehicle, being towed by another vehicle like a tractor or any other agricultural self-driving vehicle.

According to some embodiments, the second receptacle, in particularly the second unloading means, may be movable between at least a first unloading position in which said second unloading means is adapted to unload goods from said second receptacle towards said good processing unit and a second unloading position, when said second unloading means being in said second unloading position, said second unloading means being adapted to unload goods from said second receptacle outside the vehicle.

The provision of a second unloading means with at least two unloading positions, provide the additional choice to the operator operating the vehicle to either reprocess processed goods which are awaiting in the second receptacle for unloading to the outside of the vehicle, or unloading processed goods in the second receptacle outside the vehicle in at least a second unloading position, which may unload in an unloading sense e.g. in a sidewise or backwards direction. This option may lead to a quicker unloading when the unloading via the first and second unloading means are performed simultaneously.

Possibly the second receptacle, and the second unloading means, is movable between at least a first, a second and a third unloading position, wherein the first and second unloading position unloads in the same unloading sense, being backwards. The first unloading position unloads in a backwards unloading sense towards the goods processing unit. The second unloading position unloads in a backwards unloading sense outwards the vehicle.

Thus, when the second receptacle is in this first unloading position, the second unloading means is adapted to unload goods from said second receptacle towards said good processing unit. When the second receptacle is in this second unloading position, said second unloading means being adapted to unload goods from said second receptacle outside the vehicle in backwards direction of the vehicle. When the second receptacle is in this third unloading position, said second unloading means is adapted to unload goods from said second receptacle outside the vehicle in a first sidewise direction. Optionally the second receptacle is adapted to be positioned in a fourth unloading position. When said second receptacle and hence said second unloading means is movable in a fourth unloading position. When this second receptacle is in this fourth position, said second unloading means is adapted to unload goods from said second receptacle outside the vehicle in a second sidewise direction opposite the first sidewise direction.

According to some embodiments, the first and second receptacle are aligned in the moving direction of the vehicle.

According to some embodiments, the first receptacle is positioned closer to the front of the vehicle as compared to the second receptacle.

In the embodiments where the first receptacle is closer to the front as compared to the second receptacle, the first receptacle having a first unloading means adapted to unload the first receptacle in two positions, and the second receptacle comprising a second unloading means adapted to unload this second receptacle in a first and a second position, the first unloading means in its first unloading position may unload the first receptacle outwards the vehicle to either the left or right side of the vehicle, while the second unloading means may unload the second receptacle backwards to either the processing unit when being in its first unloading position, or outside the vehicle when being in its second unloading position. The first receptacle with a first unloading means in the second unloading position, may reload or transfer its load to the second receptacle in backwards direction.

Alternatively, the second receptacle is positioned closer to the front of the vehicle as compared to the first receptacle.

In these embodiments, the first receptacle having a first unloading means adapted to unload the first receptacle in two positions, and the second receptacle comprising a second unloading means adapted to unload this second receptacle in a first and a second position, the first unloading means in its first unloading position may unload the first receptacle outwards the vehicle to either the left or right side of the vehicle, while the second unloading means may unload the second receptacle forwards the vehicle to either the processing unit when being in its first unloading position, or outside the vehicle when being in its second unloading position. The first receptacle with a first unloading means in the second position may reload or transfer its load to the second receptacle in a forward direction.

According to some embodiments, the first unloading means in first unloading position may be adapted to unload goods from said first receptacle outside the vehicle to one of the left or right side of the vehicle, in said second unloading position, said first unloading means being adapted to unload goods from said first receptacle into said second receptacle in a direction towards the back of the vehicle. According to some embodiments, the first receptacle is rotatable between said first and said second position.

According to some embodiments, the axis of rotation may be substantially perpendicular to the chassis of the vehicle. Substantially perpendicular may be variable, wherein the angle between the plane of the chassis and the axis of rotation may vary in a range of 70° to 90°, 90° meaning perpendicular. The angle between the plane of the chassis and the axis of rotation is to be understood as the smallest angle between this the axis of rotation and the vertical projection of the axis on this plane of the chassis.

Hence, for the vehicle comprising a chassis defining a plane, the angle between the plane of the chassis and said axis of rotation may be in the range of 70° to 90°.

During rotation, the angle between the plane of the chassis and the axis of rotation may change and may be dependent on the rotational position of the first receptacle. As such the inclination of the floor surface of the first receptacle may change in inclination dependent on the rotational position the first receptacle has. This may provide an adapted orientation of the floor of the first receptacle, facilitating more easily the unloading in either one of the unloading positions.

Possibly, the first receptacle may be tiltable, e.g. rotatable over an axis of rotation being perpendicular to the direction of movement of the first unloading means and parallel to the chassis of the vehicle. The angle of rotation may be in the range of 0° to 85°, with preference of tilting to a degree of less than 65°, even less than 45°, e.g. in a range of 0° to 35°. In this respect, 0° means there is no tilting, hence the first receptacle is parallel to the plane of the chassis of the vehicle. The axis of rotation is preferably positioned at the lower side of the first receptacle, and most far remote from the side via which the first receptacle is unloads. When this first receptacle is tiltable, e.g. rotatable over an axis of rotation being perpendicular to the direction of movement of the first unloading means and parallel to the chassis of the vehicle, the tilting and the rotation, the latter being over an axis substantially perpendicular to the chassis of the vehicle, of the first receptacle may cooperate, resulting in a similar movement of the first receptacle and the first unloading means.

The chassis of the vehicle is the mechanical structure which carries the other elements of the vehicle and which defines a substantially planar surface, carried by the plurality of wheels and/or tracks, the latter also often referred to as caterpillar tracks.

The vehicle in general may be driven by an electromotor, a combustion motor or any other suitable power source. The vehicle may be supported on the ground by one or a plurality of tires, optionally double tires, and/or one or more tracks.

According to some embodiments, the first receptacle may be rotatably mounted on a slewing bearing or on a trust bearing. Alternatively the first receptacle may rotate using a sliding system, i.e. by rotating one or more substantially parallel planes, like steel plates or polymer, optionally low friction polymer plates one onto the other around a possibly central axle. Possibly the rotation may be facilitated by lubrication, e.g. using oil or grease or alike. One of the two planes may rotate in view of the other, which is preferably fixed to either the chassis of the vehicle or the lower side of the first receptacle. Possibly a system which comprises a sliding plate comprising an opening coupled to one of the chassis and the first receptacle, and a kingpin coupled to the other of the chassis and the first receptacle may be used. The rotation of this sliding system may be caused by a power source, like a hydraulic, pneumatic or electric power source, or combination thereof. The actuation of the rotation may be made by means of a motor, a motor with spindle, a worm and worm wheel, a gear and/or a gear system and/or one or more chains and/or one or more cables and/or one or more cylinders, and alike and combinations thereof.

A slewing bearing, also referred to as slewing ring may be driven slewing bearing , for rotating the first receptacle.

A slewing bearing is a bearing comprising two coaxially positioned rings or races, one ring or race, being the inner ring or inner race, is encompassed by the other ring or race, being the outer ring or race, while rolling elements being radially positioned between the two rings or races and allowing the one ring or race to rotate in view of the other around the common axis. In use, one ring or race is fixed to the frame, in this vehicle to the chassis, and is the stationary ring or stationary race.

The other ring or race may axially rotate in view of the stationary ring or race, and is called rotating ring or race. This rotating ring may be coupled to the receptacle. The rotation of this rotating ring may be caused by a power source, like a hydraulic, pneumatic or electric power source, or combination thereof. The actuation of the rotation may be made by means of a motor, a motor with spindle, a worm and worm wheel, a gear and/or a gear system and/or one or more chains and/or one or more cables and/or one or more cylinders, and alike and combinations thereof.

Any slewing bearing may be used. The slewing bearing may preferably be a ball bearing, a roller bearing, a cylindrical bearing or a tapered roller bearing. Most preferably a slewing ball bearing is used, optionally comprising one or more than one, like two or three, rows of balls.

A thrust bearing may be used as well. A trust bearing is a bearing comprising two discs, also referred to as raceway discs, mutually axially separated by a set of rolling elements, like balls, rollers, needles and alike and which are often held in a cage. The two discs, coaxially positioned, may rotate around the common axis in view of each other due to the presence of the rolling elements positioned between them. In use, one disc is fixed to the frame, in this vehicle to the chassis, being the stationary disc. The other disc may axially rotate in view of the stationary disc, and is called rotating disc. This rotating ring may be coupled to the receptacle. The rotation of this rotating ring may be caused by a power source, like a hydraulic, pneumatic or electric power source, or combination thereof. The actuation of the rotation may be made by means of a motor, a motor with spindle, a worm and worm wheel, a gear and/or a gear system and/or one or more chains and/or one or more cables and/or one or more cylinders, and alike and combinations thereof.

Any thrust bearing may be used. The thrust bearing may preferably be a thrust ball bearing, a thrust roller bearing, a thrust cylindrical bearing or a thrust tapered roller bearing.

According to some embodiments, the angle between the first unloading sense of the first unloading means in the first unloading position and a second unloading sense of the first unloading means in the second unloading position may be at least 65°.

This means that the first receptacle is rotatable over an angle of at least 65°.

The angle between the first unloading sense of the first unloading means in the first unloading position and a second unloading sense of the first unloading means in the second unloading position may be at least about 90°. This means that the first receptacle is rotatable over at least 90°.

The unloading sense of the first unloading means is defined as the angle between the chassis line with its sense from the front to back, and the unloading sense of the first unloading means. Hence the unloading sense being 0° means that the unloading direction of first unloading means is parallel to the chassis line with sense from the front to back.

Preferably the unloading sense of the first unloading means in the second unloading position is 0°, while the unloading sense of the first unloading means in the first unloading position is preferably at least 65°, such as possibly at least 90°, rotated in one of the clockwise or counterclockwise sense. In a counterclockwise sense means that the first unloading means in the first unloading position may unload at the right side of the vehicle. In a clockwise sense means that the first unloading means in the first unloading position may unload at the left side of the vehicle.

As mentioned, optionally, the first receptacle may be movable between at least a first, a second and a third unloading position.

When the first receptacle is in this first unloading position, the first unloading means is adapted to unload goods from said first receptacle outside the vehicle, in a first sidewise unloading direction. When the first receptacle is in its third unloading position, the first unloading means is adapted to unload goods from said first receptacle outside the vehicle in a second sidewise unloading direction. When the first receptacle is in this second unloading position, the first unloading means is adapted to unload goods from said first receptacle towards and into this second receptacle in a second unloading direction.

In these embodiments, preferably the first receptacle is rotatable over an angle of at least 130°, more preferably over an angle of at least 180°.

According to some embodiments, the first receptacle may be movable between at least said first, said second and a third unloading position, the first receptacle when being in its third unloading position being adapted to unload goods from said first receptacle outside the vehicle in a third unloading direction, the angle between the first unloading sense of the first unloading means in the first unloading position and the third unloading sense of the first unloading means in the third unloading position is at least 130°.

More preferably, the angle between the first unloading sense of the first unloading means in the first unloading position and the third unloading sense of the first unloading means in the third unloading position is at least 180°.

Preferably the unloading sense of the first unloading means in the second unloading position is preferably 0°, while the unloading sense of the first unloading means in the first unloading position is preferably at least 65°, such as possibly at least 90° rotated in counterclockwise sense, the unloading sense of the first unloading means in the third unloading position is preferably at least 65°, such as possibly at least 90° rotated in clockwise sense.

This means that the first unloading means in the first unloading position may unload at the right side of the vehicle while the first unloading means in the third unloading position may unload at the left side of the vehicle.

Turning to the second receptacle, this second receptacle, and hence said second unloading means, may be movable between at least a first, a second, and optionally a third and even possibly a fourth unloading position. The second receptacle may be rotatable between some of these unloading positions. The second receptacle may be rotatably mounted on the chassis of the vehicle.

The unloading directions of the second receptacle, and hence said second unloading means, being in the first unloading position, providing goods to the good processing unit, and in the second unloading position, providing goods being unloaded outside the vehicle, may be identical. The second receptacle may be statically fixed to the vehicle, more particularly to the chassis of the vehicle. The elements of the second unloading means may be adjustable in position in order to direct the goods to the required paths. Possibly, the second receptacle may be tiltable, e.g. rotatable over an axis of rotation being perpendicular to the direction of movement of the second unloading means and parallel to the chassis of the vehicle. The angle of rotation may be in the range of 0 to 85°, but is preferably less than or equal to 65°, such as less than or equal to 45°, e.g. less than or equal to 35°, e.g. 30° or 20°. The axis of rotation is preferably positioned at the lower side of the second receptacle, and most far remoted from the side via which the second receptacle is unloaded.

When the second receptacle, and hence said second unloading means have a third and optionally even a fourth unloading position, the second receptacle may be movable, preferably rotationally moveable, on the vehicle, more particularly on the chassis of the vehicle. For this movable mounting, the same or similar means may be used.

Possibly the second receptacle, and hence said second unloading means may be rotatable between the first and second unloading positions on the one hand, and the third and/or possibly fourth unloading position on the other hand. Also in this case, similarly or identically as for the first receptacle, a sliding system, a slewing bearing or a trust bearing may preferably be used. Also for this second receptacle, identically as for the first receptacle, the angle between the plane of the chassis and the axis of rotation of this second receptacle may be variable and this in the range of 70° to 90°. During rotation, this angle thus may change in the range of 70° to 90°.

Alternatively, when the second receptacle is tiltable, e.g. rotatable over an axis of rotation being perpendicular to the direction of movement of the second unloading means and parallel to the chassis of the vehicle, the tilting and the rotation of the second receptacle may cooperate, resulting in a similar movement of the second receptacle and the second unloading means as compared to the first receptacle and the first unloading means

Also for the second receptacle, the rotation, tilting and/or movement of the elements of the second receptacle and its second unloading means, may be driven by a power source, like a hydraulic, pneumatic or electric power source, or combination thereof. The actuation of the rotation, tilting and/or movement of the elements of the second receptacle and its second unloading means may be made by means of a motor, a motor with spindle, a worm and worm wheel, a gear and/or a gear system and/or one or more chains and/or one or more cables and/or one or more cylinders, and alike and combinations thereof.

When the second receptacle and the second unloading means have at least three unloading positions, wherein the first and second unloading position unloads in the same unloading sense, being backwards and the first unloading position unloads in a backwards unloading sense towards the goods processing unit, the second unloading position unloads in a backwards unloading sense outwards the vehicle, the angle between the first and second unloading sense - being identical one to the other - of the second unloading means, and the third unloading sense of the second unloading means in the third unloading position may at least be 65°.

This means that the second receptacle is rotatable over an angle of at least 65°.

The angle between the first and second unloading sense of the second unloading means in the first and second unloading position and the third unloading sense of the second unloading means in the third unloading position may be at least about 90°. This means that the second receptacle is rotatable over an angle of at least 90°.

The unloading sense of the second unloading means is defined as the angle between the chassis line with its sense from the front to back, and the unloading sense of the second unloading means. Hence the unloading sense being 0° means that the unloading direction of second unloading means is parallel to the chassis line with sense from the front to back.

Preferably the unloading sense of the second unloading means in the first and second unloading position is 0°, while the unloading sense of the second unloading means in the third unloading position is preferably at least 65°, such as possibly at least 90°, rotated in one of the clockwise or counterclockwise sense. In a counterclockwise sense means that the second unloading means in the third unloading position may unload at the right side of the vehicle. In a clockwise sense means that the second unloading means in the third unloading position may unload at the left side of the vehicle.

As mentioned, optionally, the second receptacle may be movable between at least a first, a second, a third and a fourth unloading position.

When the second receptacle is in its first or second unloading position, the second unloading means is adapted to unload goods from said second receptacle backwards the vehicle. When the second receptacle is in its third unloading position, the second unloading means is adapted to unload goods from said second receptacle outside the vehicle in a first sidewise unloading direction. When the second receptacle is in this fourth unloading position, the second unloading means is adapted to unload goods from said second receptacle towards a second sidewise unloading direction.

In these embodiments, preferably the second receptacle is rotatable over an angle of at least 130°, more preferably over an angle of at least 180°.

More preferably, the angle between the third unloading sense of the second unloading means in the third unloading position and the fourth unloading sense of the second unloading means in the fourth unloading position is at least 180°.

Preferably the unloading sense of the second unloading means in the first and second unloading position, is preferably 0°, while the unloading sense of the second unloading means in the third unloading position is preferably at least 65°, such as possibly at least 90° rotated in counterclockwise sense, the unloading sense of the second unloading means in the fourth unloading position is preferably at least 65°, such as possibly at least 90° rotated in clockwise sense.

This means that the second unloading means in the third unloading position may unload at the right side of the vehicle while the second unloading means in the fourth unloading position may unload at the left side of the vehicle.

In general, when the first receptacle and the first unloading means, and the second receptacle and the second unloading means is in an unloading position unloading goods outside the vehicle, the unloading sense may be varied during unloading. This in order to more evenly load or position the goods in or on the place to where the goods are unloaded. While unloading, preferably the unloading sense may be varied or controlled over an arc of at least 50°, meaning that the unloading sense varies from a mean unloading sense and two extreme unloading senses being this mean unloading sense plus 25° in clockwise or in counterclockwise sense. Preferably the unloading sense may be varied or controlled over an arc of at least 90°, even up to an arc of 120°.

According to some embodiments, the good processing unit may be adapted to separate the good processed in at least two separate groups of products.

The good processing unit may be a unit for separating different components in the goods. As an example, the good processing unit may be adapted to separate crops or roots, like potatoes, carrots, beets, onions, and alike from stone, garbage, wooden blocks of material, metal parts and/or ground. Alternatively or additionally, this good processing unit may comprise a separating means to separate the goods into two or more streams of goods, the average size of goods in the streams being different. The good processing unit may alternatively or additionally comprise a means to separate goods from excess material, like ground lumps. The good processing unit may further comprise a cleaning means to clean the goods, like crops or roots, like potatoes, carrots, beets, onions, and alike.

According to some embodiments, the second unloading means may comprise a hedgehog belt.

This hedgehog belt may also function as a separating means to separate crops and roots from leaves or foliage and alike, when and while the second unloading means is directing the goods to the good processing unit. This hedgehog belt may be referred to as unloading conveyor belt.

Alternatively or additionally, the second unloading means may comprise other types of belts or other means, like a wire rod conveyor belt, like a steel wire rod conveyor belt, optionally provided with a wire mesh or a similar open structure, mesh conveyor belts like polymer or metal mesh conveyor belts, sieve belts or sieve mesh belts, a set or rollers, also referred to as a bed of rollers, with either transverse rolls or rolls in hooked position, optionally comprising profiled rollers like spiral, star or diabolic rollers, closed conveyor belts, like PCV or other polymeric conveyor belts, and optionally having a profiled transport surface, one or more screws, and alike. The second unloading means may comprise or even may be a full plate, functioning as a slide or sliding surface.

Also at the inner side of the first and/or second receptacle, at the bottom side, similar or identical conveyors may be used to move the goods in the receptacle towards this unloading conveyor belt.

In a similar way, the first and/or second unloading means may comprise such conveyor belts or belts. This first and/or second unloading means may comprise a series of conveyors or belts, all possible identical or similar, to create a non-flat, shaped unloading path for the goods.

According to some embodiments, the first and/or second unloading means may comprise at least one wire rod conveyor belt.

Under the first and/or second receptacle, and under the first unloading means at least when positioned in the second unloading position, a collection system to collect dirt, dust and material falling though the conveyors or belts may be provided. this may be a shield or cloth or alike.

Both receptacles may be similar or identical in dimension. A receptacle preferably is cuboid or frustum-shaped. The height of the receptacles may vary widely from about 0.2m to 4m, such as between 1m and 3.5m, such as 2m or 3m.

The width of the receptacles, i.e. the dimension perpendicular to the driving direction and parallel with the chassis plane, may range from 1.5m to 4m, with a preference in the range of 2.5m to 3m. Along the height of the receptacles, the width may vary, and preferably increases upwards.

The depth of the receptacles, i.e. the dimension parallel to the driving direction and parallel with the chassis plane, may range from 2m to 10m, with a preference in the range of 5m to 7m. Along the height of the receptacles, the depth may vary, and preferably increases upwards.

The two receptacles may be identical in volume, however, may as well differ. Preferably the first receptacle has a larger volume as compared to the second receptacle. The volume of each of the receptacles may preferably be in the range of 5m³ to 25 m³, such as from 8m³ to 15m³.

The maximum load obviously depends on the goods loaded. For roots like potatoes, the maximum load may vary between 5 ton and 20 ton, such as about 8 ton or 10 ton.

To allow inspection of the content of the receptacles, the walls of the receptacle may at least partially be provided as a metal or polymer grill, or provided with apertures.

The unloading speed of the two unloading means may range over a wide range of speeds, dependent on the unloading ongoing. As an example, the unloading speed of the unloading means may range from 1 m/min, or even less than 1 m/min, to 70 m/min.in particularly the second unloading means may be adapted to unload slowly, such as in the range of less than 1m/min to 5m/min, when positioned in the unloading position leading the goods to the processing means. for unloading the goods from the receptacles outside the vehicle, high speeds may be applied, up to 70 m/min.

It is understood that all means mentioned, like the unloading means, as well as all means to move, like to rotate and/or to tilt, the receptacles between different positions, the vehicle itself, the belts and alike, may be driven by one or more power sources, like a hydraulic, pneumatic or electric power sources, or combination thereof. The actuation of the means to put any of the parts of the vehicle in motion, may be caused by means of a motor, a motor with spindle, a worm and worm wheel, a gear and/or a gear system and/or one or more chains and/or one or more cables and/or one or more cylinders, and alike and combinations thereof.

According to a second aspect of the invention, a vehicle according to the first aspect of the present invention is used for transporting harvested root crops over the crop field while processing said harvested root crops. The vehicle according to the first aspect of the present invention may be used for transporting harvested potatoes over the potato field while processing said harvested potatoes.

according to some embodiments, the processing may include separating the potatoes from ground and/or stones.

It is understood that features of one aspect of the invention may be combined with one or all features of one or all other aspects of the invention.

### Brief Description of the Drawings

Fig. 1 and 2 show schematically a vehicle according to the invention in perspective and in sideview.
Fig. 3a and 3b, and 4a and 4b show schematically alternative vehicles according to the invention in perspective and in sideview
figures 5a, 5b and 6 to 11 show schematically perspective views of the vehicle of figures 1 and 2, during different activities of loading and unloading goods.
Figure 12 is a schematical top view of the vehicles of figures 1 to 11, indicating the unloading senses of the various receptacles of the vehicle.
Figure 13 shows schematically another vehicle according to the invention in perspective and in sideview.
Figures 14a and 14b shows schematically the functioning of the good unloading means of the vehicle of figure 13.

In the different figures the same reference signs refer to the same or a similar feature.

In general, in the context of this invention, when reference is made to a range, the range is to be-be understood inclusive unless otherwise stated.

It is also understood that features of one aspect of the invention may be combined with one, more than one or even all features of one, more than one or all other aspects of the invention.

### Detailed Description of Embodiment(s)

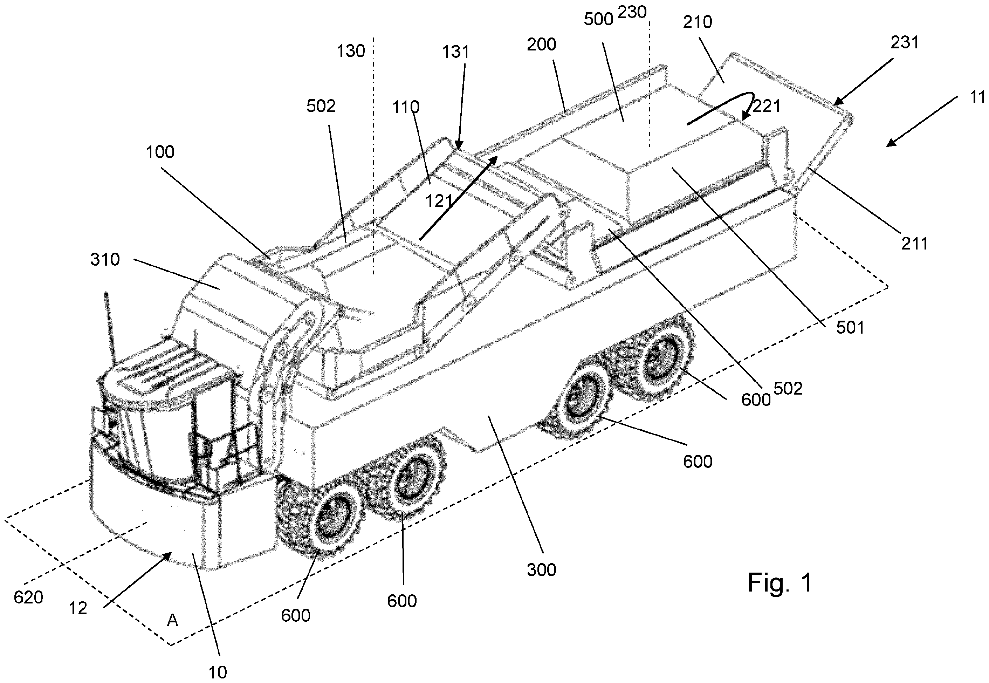

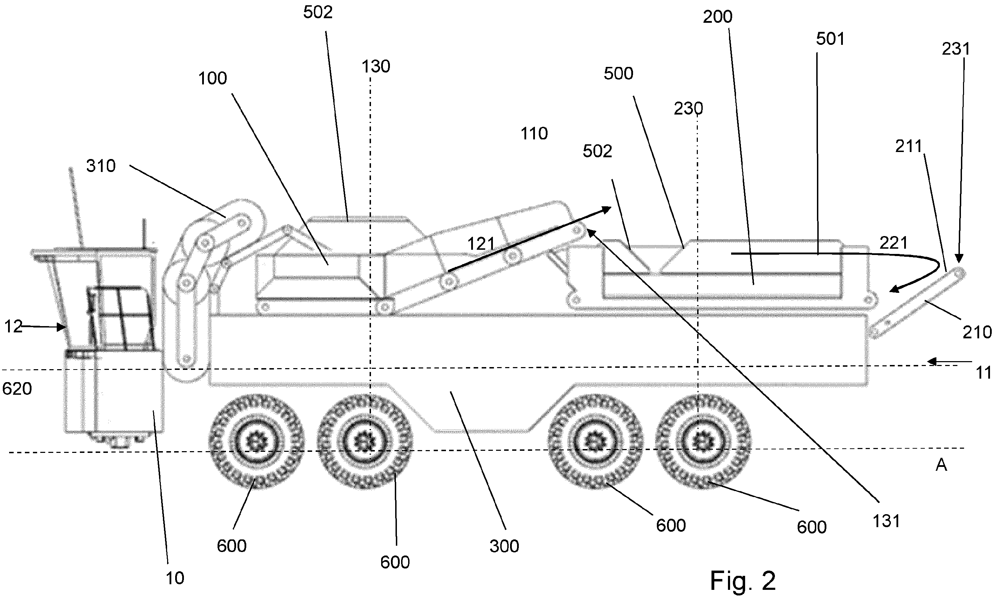

A vehicle 10 according to the present invention is shown in figure 1 and figure 2. The vehicle 10 comprises first receptacle 100 and a second receptacle 200, also referred to as first bunker and second bunker. The vehicle 10 is adapted to move goods 500 over agricultural fields. Hence the vehicle in figure 1 is a self-propelling vehicle. The second receptacle 200 is adapted for receiving goods 501 to be processed by a good processing unit 300. This good processing unit 300, in this embodiment located under the two receptacles 100 and 200, may be used to clean the goods or to separate the goods in different product streams. The first receptacle 100 is adapted to receive goods 502 having been processed by said good processing unit 300. As the good processing unit 300 is located under the two receptacles, the vehicle 10 comprises at least a good lifting means 310 to lift and provide the goods 502 having been processed to the first receptacle 100.

The first receptacle 100 comprises a first unloading means 110 to unload goods 502 from the first receptacle. This first unloading means 110 may be one or a series of transport belts, such as wire rod transport belts.

Also the second receptacle 200 comprises a second unloading means 210 adapted to unload goods 501 from the second receptacle 200. The second unloading means 210 may unload the goods 501 from the second receptacle 200 to the good processing unit 300. As a mere example, the second unloading means 210 may comprise a hedgehog belt 211, which can be oriented such the goods 501 are separated from e.g. leaves when contacting the hedgehog belt 211. The leaves are driven to and over the upper edge of the hedgehog belt 211, while the goods 501 fall towards the good processing unit 300.

As a mere example, the goods 500 may be freshly harvested potatoes, harvested by a harvester which dumped the potatoes in the second receptacle 200 as potatoes 501 to be processed. The good processing unit 300 may comprise in this case a set of rollers to reduce the amount of ground sticking to and accompanying the potatoes 501. This removed ground may drop down on the fields the vehicle is driving on while processing. The lower side of the vehicle 10 may be open, allowing this ground to fall down out of the vehicle 10. The good processing unit 300 may further comprise means to clean the potato stream from non-potato elements, or to wash the potatoes, or alike. The processing happens while the potatoes are transferred through the good processing unit 300 from the back 11 of the vehicle to the front 12 of the vehicle 10.

At the front end of the good processing unit 300, the potatoes are lifted by the lifting means 310, such as a lifting belt, and are transferred into the first receptacle 100.

The vehicle 10 as shown in figure 1 and 2 is in processing action either while driving on an agricultural field, or when standing still.

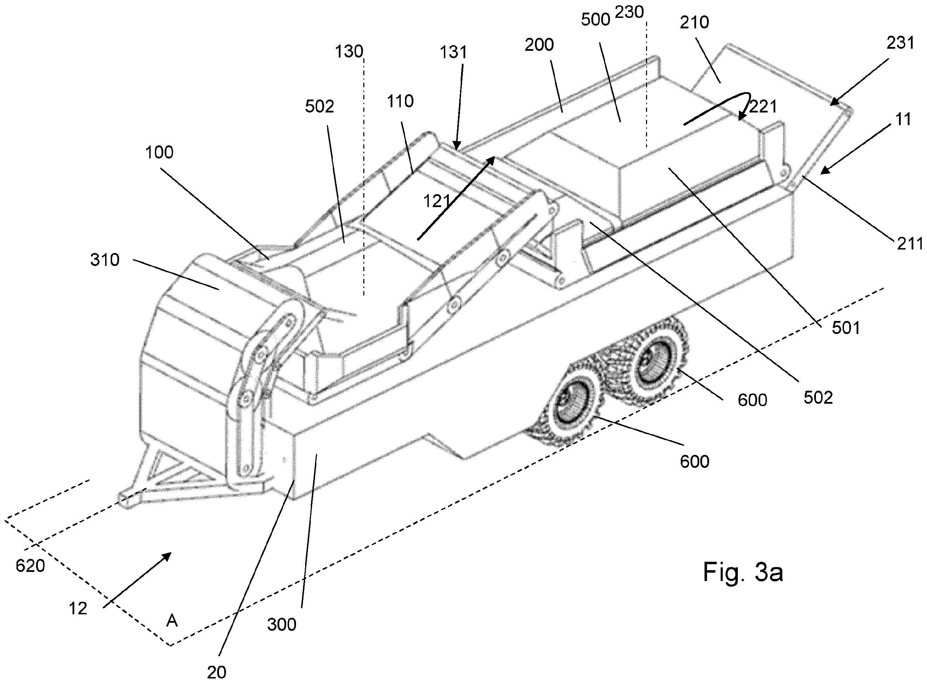

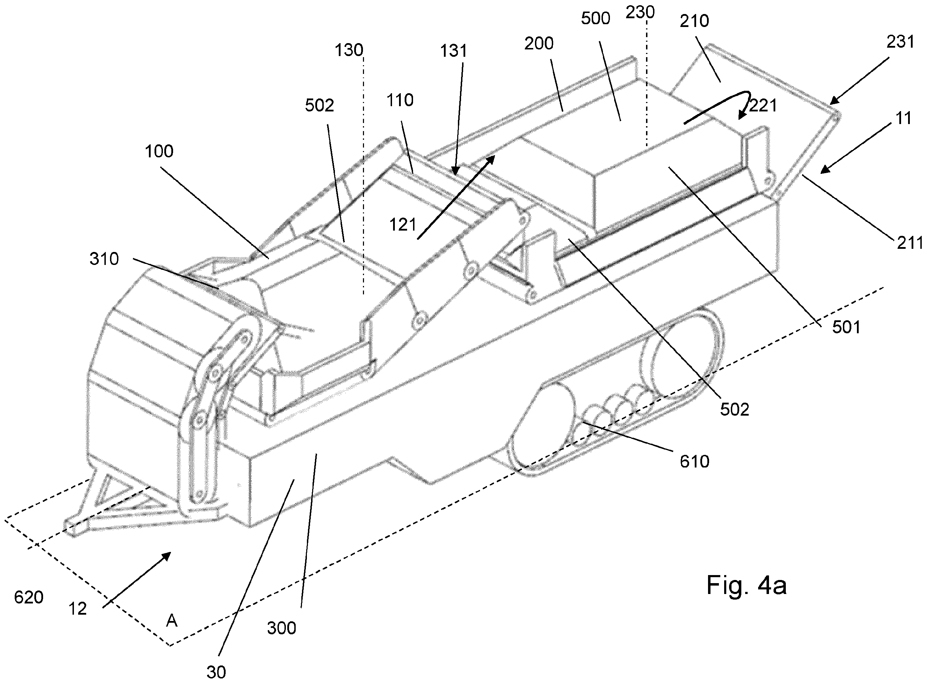

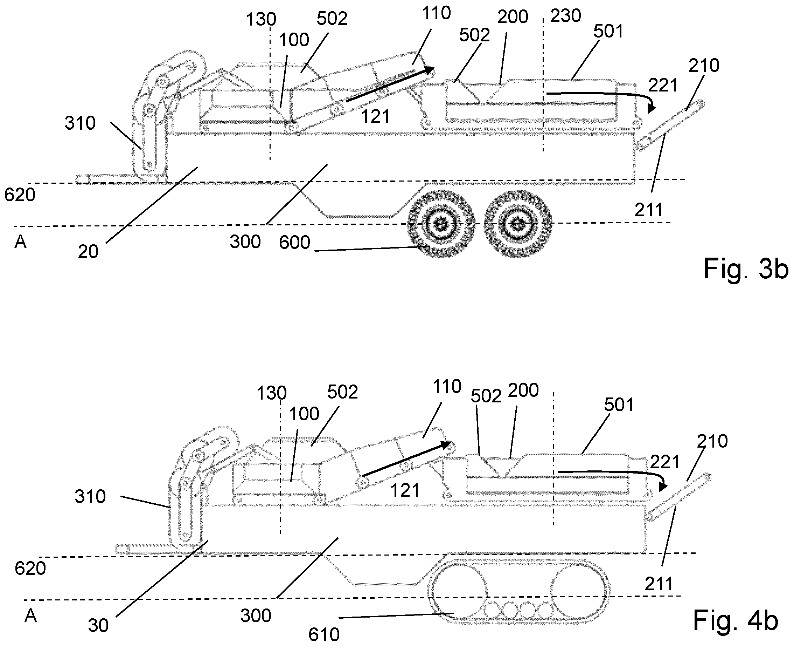

As mere alternatives, two other vehicles 20 and 30 are shown in figures 3a and 3b, and 4a and 4b. The vehicles 20 and 30, in contrast to the vehicle 10 which is self-propelling, are towed vehicles 20 and 30, to be towed by e.g. a tractor. All features identified by the same reference signs in these figures, refer to the same features. As is clear, the vehicle 10 and 20 are moved on wheels 600, while the vehicle 30 is supported by tracks 610. Wheels 600 and tracks 610 may be used, even interchanged, for each of the vehicles 10, 20 and 30.

For each of the vehicles 10, 20 and 30, the chassis of the vehicle defines a chassis plane A; which is preferably substantially horizontal when the vehicle travels on horizontal ground.

As will be made clear by referring to vehicle 10 in the figures 1 and 5 to 11, the receptacles 100 and 200 of the vehicle may be positioned in different unloading positions. It is clear that these different positions may also be provided by the vehicles 20 and 30 when the corresponding receptacles are provided with the corresponding possibilities to unload the goods 501 or 502.

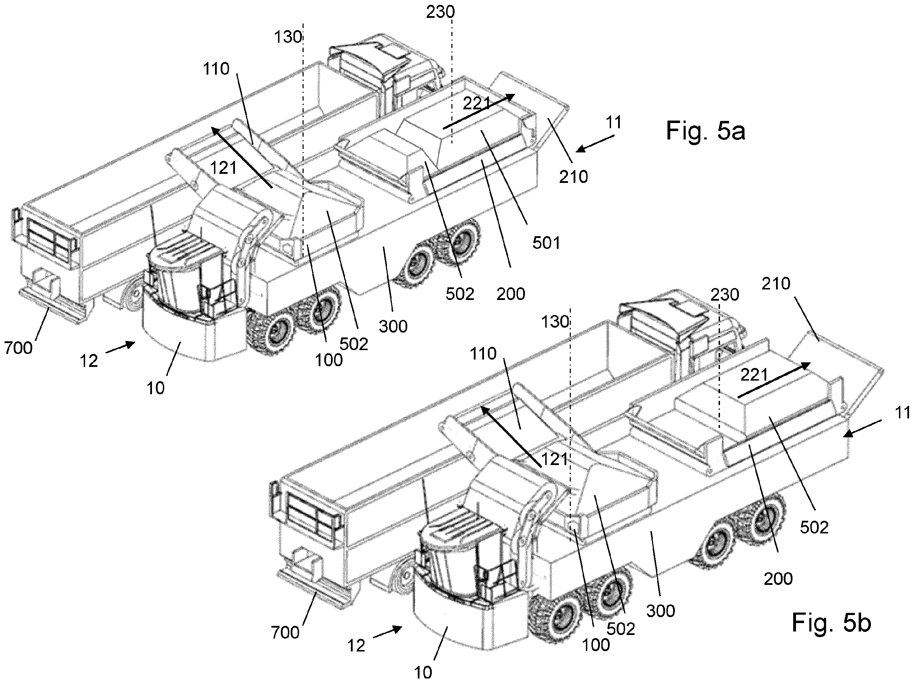

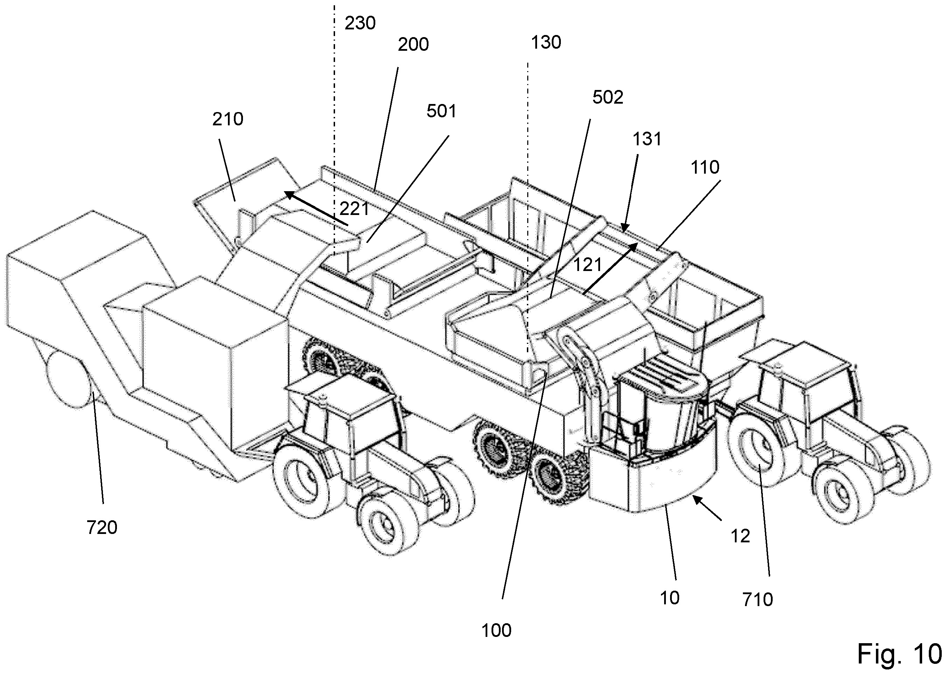

Figures 1 and 5 provide the first particular use of the vehicle 100. In figure 1, the vehicle may be understood as driving on the agricultural field, where goods, like potatoes are freshly harvested. The vehicle 10 moves adjacent a harvester 720 - one is shown in figure 10), which harvester 720 provides the freshly harvested goods, like potatoes, in the second receptacle 200, while moving and harvesting. Usually the harvester has a temporary storage, or buffer, which is emptied in the second receptacle 200, while moving adjacent the vehicle 10. Once the harvester has emptied its temporary storage, the vehicle 10 moves to another harvester to repeat this collection of freshly harvested goods. While collecting the goods in the receptacle 200, the unloading means 210 may already unload goods 501 to the good processing unit 300, which on its turn moves the processed goods 502 into the first receptacle 100. As such gradually the first receptacle may be filled with processed goods 502, while goods to be processed 501 are in the second receptacle 200.

As is clear in figure 1, the second receptacle 200 is in a first unloading position, with an unloading sense 221 backwards towards the hedgehog belt 211. The unloading sense of the second receptacle 200 in first unloading position is 0° as it is parallel to the chassis line 620 with sense from the front 12 to back 11. Alternatively, the first unloading position may be more than 0°, hence inclined upwards, or may be less than 0°, hence inclined downwards, i.e. inclined towards the chassis plane. Optionally only the last part of the second receptacle 200 may be inclined, even inclined towards the chassis plane. The first receptacle 100 is in a second unloading position, with an unloading sense 121 backwards towards the second receptacle 200. The unloading sense 121 of the first receptacle 100 in second unloading position is also 0° as it is parallel to the chassis line 620 with sense from the front 12 to back 11. When the first receptacle 100 is filled with processed goods 501, the unloading means 110 may start unloading processed goods 502 in the second receptacle 200. Due to the positioning of the receptacles one after the other, this transfer will limit the blending of the processed and unprocessed goods.

In the next operation, which is also visible in figure 1, the vehicle 10 may move to the unloading area at the field, still processing the unprocessed goods 501,and filling the second receptacle with processed goods 502.

As shown in figure 5a and 5b, the first receptacle is moved from the second unloading position to the first unloading position in figures 5a and 5b. The first receptacle is rotated counterclockwise over about 90° round the axis 130 , and the end of the first unloading means 110 is brought above the trailer of a transporting truck 700. The unloading means 110 may unloading processed goods 502 in the truck 700. The unloading sense 121 is now 90°. Possibly the end of the first unloading means 110 may be raised or lowered to accommodate and limit the height of the drop off, or tip off point 131 and hence limit the damage to the unloaded goods. It may as well be an option to incline the axis 130 when the first receptacle 100 is rotated, in order to accommodate the height of the tip off point 131. Possibly, during unloading of the first receptacle 100, the unloading sense 121 may be varied to dump the goods at different positions in the truck 700. The unloading sense 121 may be modified to the left or right of this initial 90°.

Meanwhile, as shown in figure 5a, the good processing unit 300 may continue to process goods 501, and the processed goods 502 are provided to the first receptacle 100. In case processed goods 502 were provided to the second receptacle 200 during moving on the field, and the unprocessed goods have left the second receptacle 200, as shown in figure 5b, these processed goods 502 may be reprocessed, and as such guide them back to the first receptacle 100 for uploading to the truck 700. Hence the provision of a vehicle 10 with two unloading positions for the first receptacle and its first unloading means, and one unloading position for the second receptacle end its second unloading means, has the advantage that the good processing unit may be active during moving on the field as well as during standstill for unloading to the processed goods.

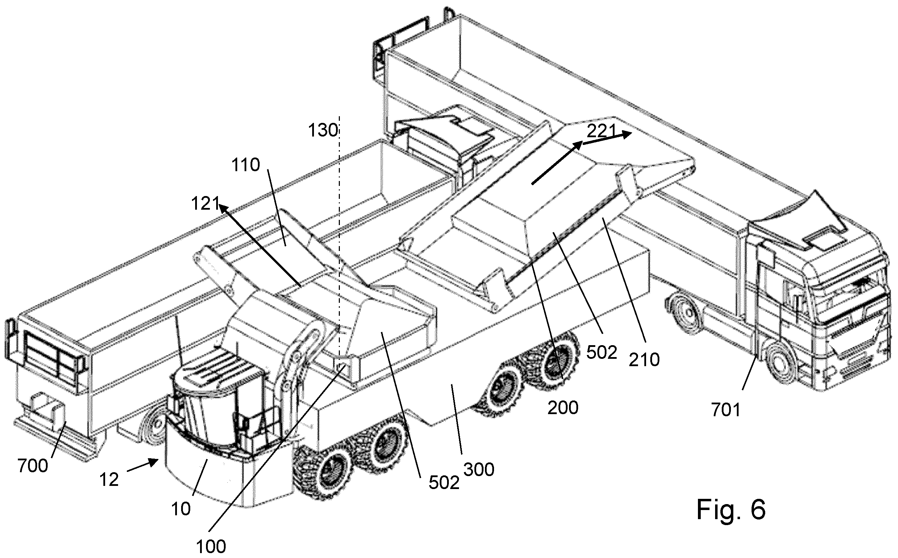

Alternatively, the good processing unit 300 may continue to process goods 501 as long as there are unprocessed goods 501 in the second receptacle 200. These goods are processed and are provided to the first receptacle 100. Once all unprocessed goods 501 are out of receptacle 200, the second receptacle and the second unloading means may be brought to their second unloading position as shown in figure 6. The processed goods 502 provided to the second receptacle 200 during moving on the field, may be unloaded in an unloading sense backwards in a second truck 701 or in a second position of the truck who earlier has received goods in the position aside the vehicle 10. For this, the second receptacle, as in this embodiment, may be tilted over a given angle, while the hedgehog belt 211 may function as unloading belt. Hence the provision of a vehicle 10 with two unloading positions for the first receptacle 100 and its first unloading means 110, and two unloading positions for the second receptacle 200 and its second unloading means 210, may reduce the time for unloading the processed goods 502.

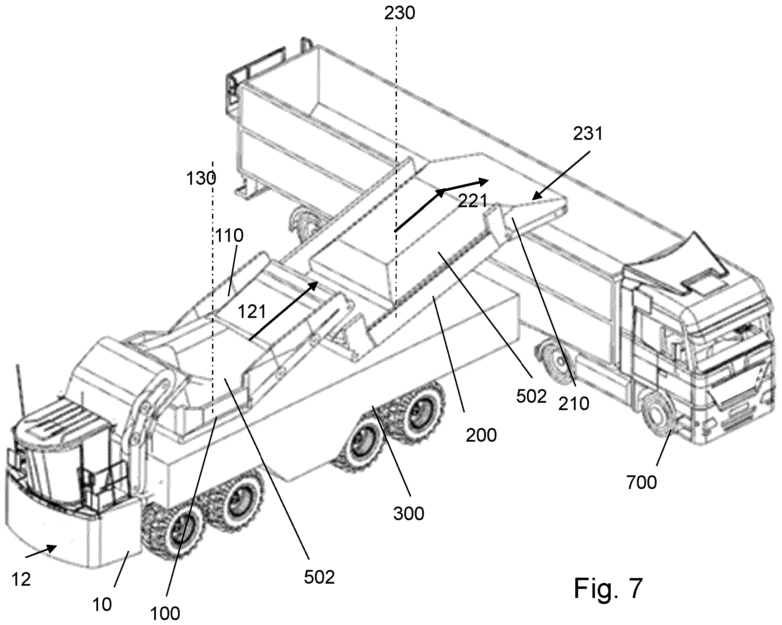

Still another alternative is shown in figure 7. In this action, the first unloading means of the first receptacle 100 remains in its second position, while the processed goods 502 are transferred to the second receptacle 200. Once all unprocessed goods 501 are out of receptacle 200, the second receptacle and the second unloading means may be brought to their second unloading position as shown in figure 7. The processed goods 502 provided to the second receptacle 200 during moving on the field, may be unloaded in an unloading sense backwards in a second truck 701 or in a second position of the truck who earlier has received goods in the position aside the vehicle 10. For this, the second receptacle, as in this embodiment, may be tilted over a given angle, while the hedgehog belt 211 may function as unloading belt. The first unloading means 110 may continue to transfer the processed goods 502 to the second receptacle 200, which on its turn unloads the goods 502 received, and this until both receptacles are empty. This shows the versatility of a vehicle 10 with two unloading positions for the first receptacle 100 and its first unloading means 110, and two unloading positions for the second receptacle 200 and its second unloading means 210.

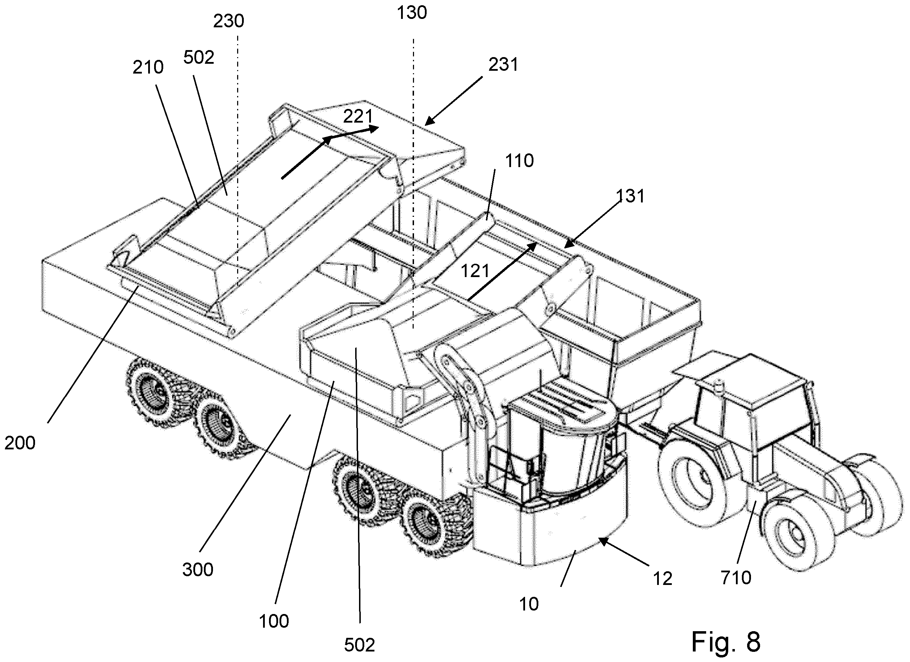

Another alternative is shown in figure 8. In this embodiment, the second receptacle 200 may be provided with at least three unloading positions. The first and second position are described in relation to the figures 1 to 7, the third unload position is shown in figure 8. The second receptacle 200 may be rotated and tilted to provide to the second unloading means an unloading sense sidewise the vehicle 10. In this embodiment the two receptacles 100 and 200 may be positioned to unload at the same side of the vehicle 10, in this figure 8 the left side of the vehicle 10. While the first receptacle is rotated about 90° clockwise round the axis 130, the second receptacle is rotated about 90° clockwise round the axis 230, and tilted to lift the tip off point 231.

In this figure 8, the good processing unit 300 may continue to process goods 501 as long as there are unprocessed goods 501 in the second receptacle 200 while the first receptacle 100 is unloading into a tipper trailer or overload trailer 710. Once all unprocessed goods 501 are out of receptacle 200, the second receptacle and the second unloading means may be brought to their third unloading position as shown in figure 8. The processed goods 502 provided to the second receptacle 200 during moving on the field, may be unloaded in an unloading sense sideways in the same tipper trailer or overload trailer 710. For this, the second receptacle 200, as in this embodiment, is rotated over about 90° and may be tilted over a given angle, while the hedgehog belt 211 may function as unloading belt. Hence the provision of a vehicle 10 with two unloading positions for the first receptacle 100 and its first unloading means 110, and three unloading positions for the second receptacle 200 and its second unloading means 210, may further reduce the time for unloading the processed goods 502.

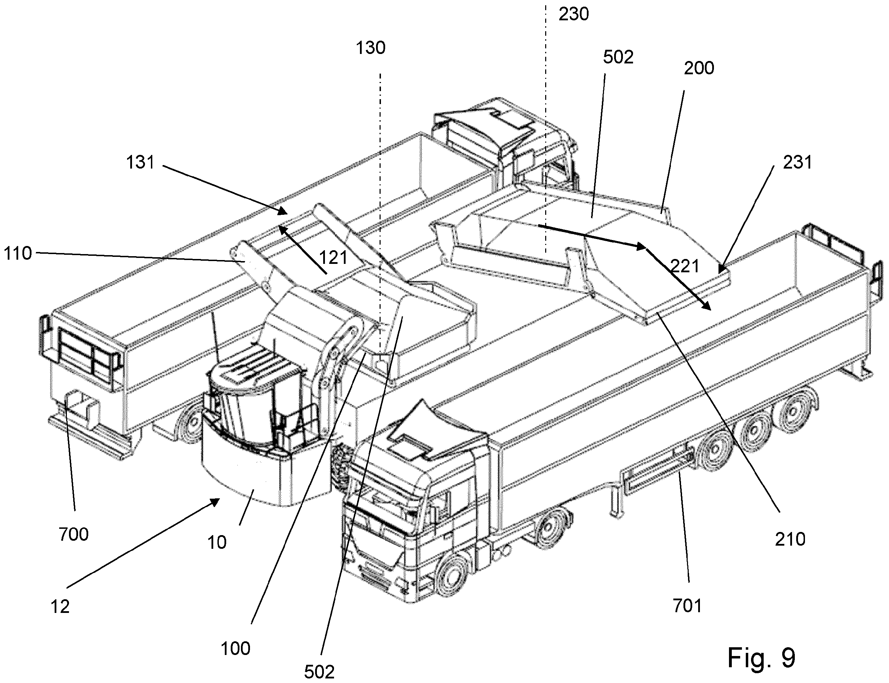

As a further option, the first receptacle may have its second unloading position to unload in a sense towards one of the sides of the vehicle 10, as shown in figure 9 to the right of the vehicle 10, whereas the second receptacle may have its third unloading position to unload in a sense towards the other of the sides of the vehicle 10, as shown in figure 9 to the left of the vehicle 10. Even as a further alternative, either or both the first and second receptacle may be positioned both of the left and the right side of the vehicle to unload. As such the first and/or second unloading means may have a further unloading position. Such provisions provide a very flexible vehicle to use during harvesting and transferring goods from the field.

As even a further option as shown in figure 10, the vehicle having a first receptacle 100 which may be unloaded in two positions, may be unloaded on the field, while driving, even while receiving itself freshly harvested goods from a harvester 720.

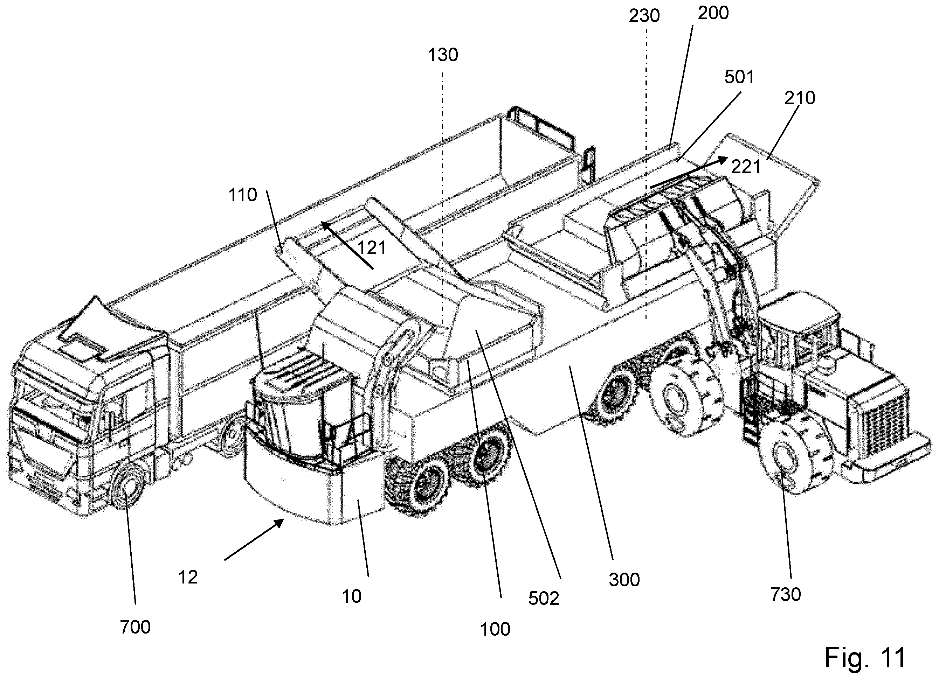

The vehicle 10 as described may also be used as a static good processing vehicle. The vehicle 10, being stalled at a given position, may on the one side be loaded with goods to be processed in the second receptacle 200, e.g. by means of a wheel loader 730 as shown in figure 11. This wheel loader may be replaced by a transport belt or alike. The goods are processed by the good processing unit 300, and provided to the first receptacle 100, from where it is unloaded sidewise to a truck 700 or any other transportation means.

It is clear that in all operational situations as set out in figures 1 and 2, and 5 to 11, the vehicle 10 may be replaced by the vehicle 20 or 30, or by a vehicle 10 provided with one or more tracks instead of wheels.

In general, recapitulating the possible situations of figures 1 to 11, the vehicle 10, having a front side 12, a backside 11, a right side 13 and a left side 14 (the latter two are to be understood as is in general the case, i.e. as understood by a person looking in the driving sense forward of a vehicle), the first receptacle 100 of the vehicle 10 is situated in the front part of the vehicle 10. The first unloading means 110 may be directed, hence has an unloading sense in the figures 1 to 11 in general indicated by reference 121. The second receptacle 200 of the vehicle 10 is situated in the rear part of the vehicle 10. The second unloading means 210 may be directed, hence has an unloading sense in the figures 1 to 11 in general indicated by reference 221.

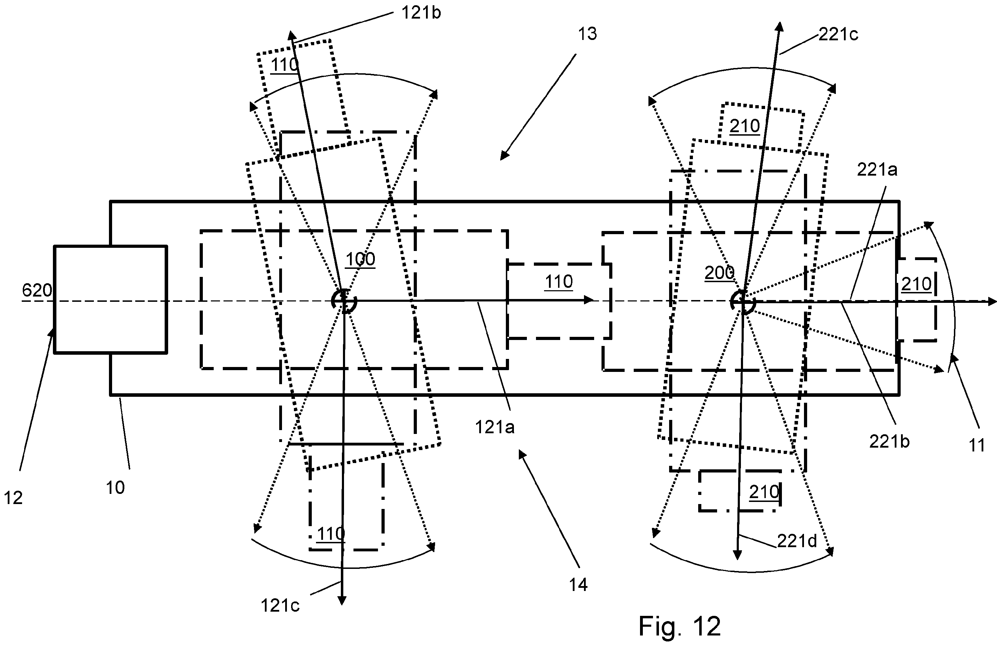

In figures 1 to 4, while making reference to the unloading senses as indicated in figure 12, the vehicles 10, 20 and 30have their first receptacle 100 and its first unloading means 110 with an unloading sense 121a, i.e. at angle 0° in view of the chassis line 620. The vehicles 10, 20 and 30have their second receptacle 200 and its second unloading means 210 with an unloading sense 221a, i.e. also at angle 0° in view of the chassis line 620. In figures 5a and 5b, the vehicles 10 and 20 have their first receptacle 100 and its first unloading means 110 with an unloading sense 121b, i.e. at angle of about 90° in view of the chassis line 620, while the second unloading means 210 has an unloading sense 221a, i.e. also at angle 0° in view of the chassis line 620. It is shown here that during the unloading of the first receptacle 100, the unloading sense 121a may be varied over an angle within the sector as drawn, as is made clear in figure 12.

In the situation as shown in figure 6, while making reference to the unloading senses as indicated in figure 12, the vehicle 10 has its first receptacle 100 and its first unloading means 110 with an unloading sense 121b, i.e. at angle of about 90° in view of the chassis line 620, while the second unloading means 210 has an unloading sense 221b, i.e. still at angle 0° in view of the chassis line 620. The first and second unloading sense 221a and 221b differ in the fact that the goods are unloaded backwards, but towards the good processing unit in sense 221a, and upwards and outwards the vehicle in sense 221b. Again, during the unloading of the first receptacle 100, the unloading sense 121b may be varied over an angle within the sector as drawn, as is made clear in figure 12. During the unloading of the second receptacle 200 in direction and sense 221b, the unloading sense 221a may be varied over an angle within the sector as drawn, as is made clear in figure 12.

In the situation as shown in figure 7, while making reference to the unloading senses as indicated in figure 12, the vehicle 10 has its first receptacle 100 and its first unloading means 110 with an unloading sense 121a, i.e. at angle of about 0° in view of the chassis line 620. The second unloading means 210 has an unloading sense 221b, i.e. still at angle 0° in view of the chassis line 620. During the unloading of the second receptacle 200 in direction and sense 221b, the unloading sense 221a may be varied over an angle within the sector as drawn, as is made clear in figure 12.

In the situation as shown in figure 8, while making reference to the unloading senses as indicated in figure 12, the vehicle 10 has its first receptacle 100 and its first unloading means 110 with an unloading sense 121c, i.e. at angle of about 90° in view of the chassis line 620. The second unloading means 210 has an unloading sense 221d, i.e. also at angle 90° in view of the chassis line 620. During the unloading of the first and second receptacle 100, 200 in direction and sense 121c respectively 221d, the unloading senses 121c and 221d may be varied over an angle within the sector as drawn, as is made clear in figure 12.

Turing to figure 9, while making reference to the unloading senses as indicated in figure 12, the vehicle 10 has its first receptacle 100 and its first unloading means 110 with an unloading sense 121b, i.e. at angle of about 90° in view of the chassis line 620. The second unloading means 210 has an unloading sense 221d, i.e. also at angle 90° in view of the chassis line 620. During the unloading of the first and second receptacle 100, 200 in direction and sense 121b respectively 221d, the unloading senses 121b and 221d may be varied over an angle within the sector as drawn, as is made clear in figure 12.

During the activity as shown in figure 10, while making reference to the unloading senses as indicated in figure 12, the vehicle 10 has its first receptacle 100 and its first unloading means 110 with an unloading sense 121c, i.e. at angle of about 90° in view of the chassis line 620. The second unloading means 210 has an unloading sense 221a, i.e. also at angle 0° in view of the chassis line 620 and directing the goods towards the good processing unit. During the unloading of the first receptacle 100 in direction and sense 121c, the unloading senses 121c may be varied over an angle within the sector as drawn, as is made clear in figure 12.

Finally, during the activity as shown in figure 11, while making reference to the unloading senses as indicated in figure 12, the vehicle 10 has its first receptacle 100 and its first unloading means 110 with an unloading sense 121b, i.e. at angle of about 90° in view of the chassis line 620. The second unloading means 210 has an unloading sense 221a, i.e. also at angle 0° in view of the chassis line 620 and directing the goods towards the good processing unit. During the unloading of the first receptacle 100 in direction and sense 121b, the unloading senses 121b may be varied over an angle within the sector as drawn, as is made clear in figure 12.

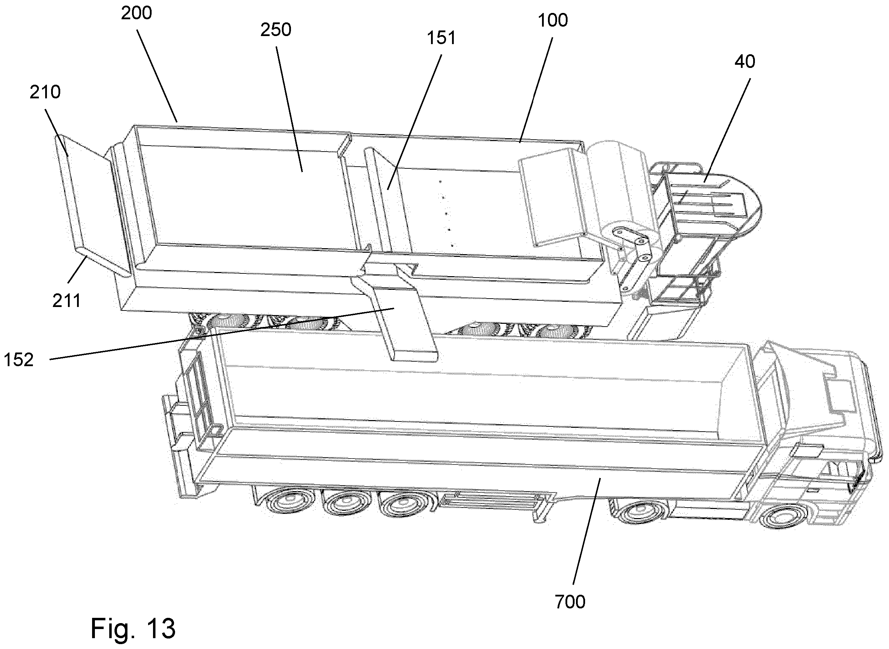

Figure 13 to 14 discloses an alternative vehicle 40 according to the invention.

The second receptacle 200, and in particular its second unloading means 210, is adapted to unload unprocessed goods 501 towards the good processing unit 300. As an example, the second unloading means 210 comprise e.g. hedgehog belt 211 which guides the goods out of the second receptacle towards the good processing unit.

This second unloading means 210 is also adapted to unload goods, either processed or not, from the second receptacle 200 outside the vehicle 40. This second unloading means 210 comprises a third good guiding means 250, being in this embodiment a transport belt providing the bottom of the receptacle 200. This third good guiding means 250 may rotate in a direction towards a good guiding means 152, being the second good guiding means, which itself is part of the first unloading means 110. Thus goods move in the sense 221e. As such the goods from the second receptacle 200 are unloaded outside the vehicle 40.

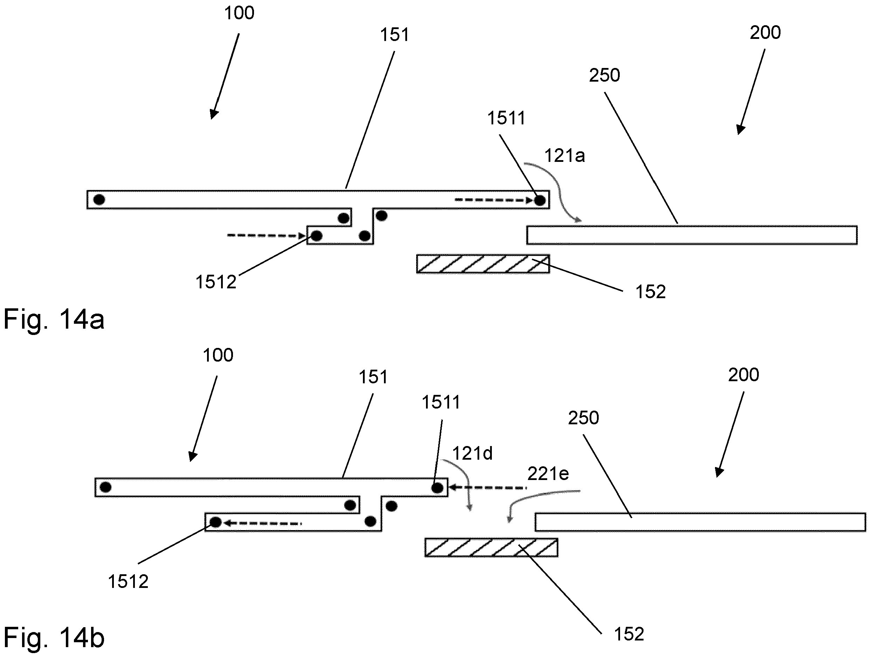

As the two receptacles 100 and 200 are aligned and the second good guiding means 152 of the first unloading means 110 is positioned between the receptacles, the first good guiding means 151 of the first unloading means 110 of the first receptacle 100, can provide processed goods 502 towards the second receptacle 200 in the sense 121a. To do this, the tip off point 1511 can be brought above the third good guiding means 250. To this extent, the return roller 1512 is positioned as showing figure 14a. The other roller 1513 is moved to compensate the moving of the roller 1512. The third good guiding means 250 now moves its load surface in a direction away from the first receptacle 100, i.e. backwards the vehicle 40.

The first good guiding means 151 of the first unloading means 110 of the first receptacle 100, can provide processed goods 502 outside the vehicle 40 as well. To do this, the return roller 1512 is positioned as showing figure 14b, positioning the tip off point 1511 above the second good guiding means 152 of the first unloading means 110. The goods are moved in sense 121d. The other roller 1513 is moved to compensate the moving of the roller 1512. This second good guiding means 152 of the first unloading means 110 now may receive goods from the first receptacle 100 and may provide the goods outside the vehicle into a truck 700 or alike. When all unprocessed goods 501 are provided to the good processing unit 300 from the second receptacle 200, the good guiding means 250 may rotate in a direction towards a good guiding means 152, and drop off the processed goods 502 in the second receptacle, onto the good guiding means 152 as well, which then evacuate these goods out of the vehicle 40.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A vehicle comprising
- At least one good processing unit for processing goods during moving of the vehicle;
- A first receptacle for receiving goods having been processed by said good processing unit, said first receptacle comprises a first unloading means to unload goods from said first receptacle;
- A second receptacle for receiving goods to be processed by said good processing unit; said second receptacle comprises a second unloading means adapted to unload goods from said second receptacle towards said good processing unit;
wherein said first receptacle and its first unloading means is adapted to unload goods from said first receptacle into said second receptacle.

2. A vehicle according to claim 1, wherein said first receptacle and its first unloading means is adapted to unload goods from said first receptacle outside the vehicle.

3. A vehicle according to any one of the claims 1 or 2, wherein said second unloading means is adapted to unload goods from said second receptacle outside the vehicle.

4. A vehicle according to claim 3, wherein said second receptacle and/or said second unloading means is movable between at least a first unloading position in which said second unloading means is adapted to unload goods from said second receptacle towards said good processing unit and a second unloading position, when said second unloading means being in said second unloading position, said second unloading means being adapted to unload goods from said second receptacle outside the vehicle.

5. A vehicle according to any one of the preceding claims, wherein said first and second receptacle are aligned in the moving direction of the vehicle.

6. A vehicle according to claim 5, wherein the first receptacle is positioned closer to the front of the vehicle as compared to the second receptacle.

7. A vehicle according to any one of the preceding claims, wherein said first receptacle and said first unloading means is movable between at least a first and a second unloading position,
- In said first unloading position, said first unloading means being adapted to unload goods from said first receptacle outside the vehicle;
- In said second unloading position, said first unloading means being adapted to unload goods from said first receptacle into said second receptacle.

8. A vehicle according to claim 7, wherein the first unloading means in first unloading position is adapted to unload goods from said first receptacle outside the vehicle to one of the left or right side of the vehicle, in said second unloading position, said first unloading means being adapted to unload goods from said first receptacle into said second receptacle in a direction towards the back of the vehicle.

9. A vehicle according to any one of the claims 7 to 8, wherein said first receptacle is rotatable between said first and said second position.

10. A vehicle according to claim 9, wherein said axis of rotation is substantially perpendicular to the chassis of the vehicle.

11. A vehicle according to claim 10, wherein said first receptacle is rotatably mounted on a slewing bearing or on a trust bearing.

12. A vehicle according to any one of the claims 9 to 11, wherein the angle between the first unloading sense of the first unloading means in the first unloading position and a second unloading sense of the first unloading means in the second unloading position is at least 65°.

13. A vehicle according to any one of the claims 9 to 12, wherein the first receptacle is movable between at least said first, said second and a third unloading position, the first receptacle when being in its third unloading position being adapted to unload goods from said first receptacle outside the vehicle in a third unloading direction, the angle between the first unloading sense of the first unloading means in the first unloading position and the third unloading sense of the first unloading means in the third unloading position is at least 130°.

14. A vehicle according to any one of the preceding claims, wherein said second unloading means comprises a hedgehog belt.

15. The use of a vehicle according to any one of the preceding claims for transporting harvested root crops over the crop field while processing said harvested root crops.
